# EUROPÄISCHE PATENTSCHRIFT

(11) **EP 1 106 329 B1**
(45) Veröffentlichungstag und Bekanntmachung des Hinweises auf die Patenterteilung: **01.10.2003**
(21) Anmeldenummer: 00125331.9
(22) Anmeldetag: 30.11.2000
(51) Int. Cl.: B29C 47/10, B29C 47/58

(54) **Extrusionsvorrichtung**
Extruder
Extrudeuse

(30) Priorität: 08.12.1999 DE 19959173
(43) Veröffentlichungstag der Anmeldung: 13.06.2001
(73) Patentinhaber: A-Z Formen- und Maschinenbau GmbH, 80992 München (DE)
(72) Erfinder: Florian Fischer, 85560 Ebersberg (DE)
(74) Vertreter: Baronetzky, Klaus, Dipl.-Ing.

(56) Entgegenhaltungen:
- DE-C- 3 808 723
- DE-C- 19 845 766
- DE-U- 29 818 696
- US-A- 3 656 382
- US-A- 4 537 568
- US-A- 5 674 004

## Beschreibung

Die Erfindung betrifft eine Extrusionsvorrichtung gemäß dem Oberbegriff von Anspruch 1 sowie ein Verfahren zur Herstellung von zu extrudierendem Material in einer Extrusionsvorrichtung, gemäß dem Oberbegriff von Anspruch 17.

Eine derartige Extrusionsvorrichtung ist beispielsweise aus der DE-OS 31 33 708 bekannt. Bei einer derartigen Extrusionsvorrichtung wird beabsichtigt, die Qualität der Zufuhr des Rohmaterials zum Extruder so gleichmäßig und gut wie möglich zu halten, wobei die Materialzufuhr bei dieser Lösung aus radialer Richtung, bezogen auf die Extruderschnecke, erfolgt. Trotz Zuführung des zu extrudierenden Materials im Übermaß ergeben sich bei derartigen Lösungen häufig Schwankungen in der Leistung. Die genannte Druckschrift sieht hierzu vor, eine spezielle Speisezone zu schaffen, die mit einer Schraubenlinie im Extrudergehäuse versehen ist, wobei durch diese Maßnahme eine bessere und gleichmäßigere Verteilung des zugeführten Materials erfolgen soll.

Andererseits hat sich diese Lösung jedoch nicht durchgesetzt, wobei ein wesentliches Problem in der radial einseitigen Belastung der Extruderschnecke liegt. Durch die Materialzufuhr entsteht ein recht starker Druck zwischen der Oberseite des Extrudergehäuses, die dem Zuführtrichter benachbart ist, und der Extruderschnecke. Dort wird das zu verarbeitende Material komprimiert und auf Scherung belastet, was die Extruderschnecke nach unten drückt.

Um zu verhindern, daß durch das Durchbiegen der Extruderschnecke die Extruderschnecke mit ihrer Seite unten an dem Extrudergehäuse schleift, ist regelmäßig ein gewisses Spiel vorgesehen. Dieses Spiel mindert aber andererseits den Wirkungsgrad der Extruderschnecke, denn der so erzeugte Spalt führt dazu, daß sich eine gewisse Rückströmung einstellt, wobei in diesem Spalt das zu extrudierende Material zudem sehr stark auf Scherung beansprucht ist, was den Materialeigenschaften nicht besonders zuträglich ist.

Nachdem die Größe des erzeugten Drucks und damit auch die Stärke der Durchbiegung stark von dem zu extrudierenden Material und auch der Temperatur abhängt, auf welche die Extrusionsvorrichtung vorgeheizt ist, muß hier mit einer gewissen Sicherheitsreserve gearbeitet werden, was andererseits den Wirkungsgrad weiter reduziert.

Ferner ist es an sich bekannt geworden, eine Förderschnecke in ihrem Eingangsbereich aufzuweiten und zugleich dem Eingangsbereich eine trichterförmige Form zu geben. Diese Lösung eignet sich für die Zufuhr von thermoplastischem Kunststoffgranulat, wobei das Granulat im Überschuß in den Trichter eingefüllt und durch die Schwerkraft der Förderschnecke zugeführt wird. Diese Lösung eignet sich jedoch im Grunde nicht für die Zufuhr von Elastomeren in Streifenform. Während Granulat bereits aufgrund seines Eigengewichts zu einer Vorverdichtung neigt und damit für eine Schüttzufuhr geeignet ist, muß bei in Streifenform vorliegendem Material, meist also bei Elastomermaterial die Zufuhr über spezielle Förderwalzen erfolgen, nachdem das Material zwar biegeschlaff ist, jedoch eine gewisse Grundfestigkeit aufweist, die verhindert, daß es als fließfähiges Material verwendet werden kann.

Trotz der bekannten Nachteile ist daher bei der Verwendung von Elastomeren als zu extrudierendem Material stets eine radiale Materialzufuhr vorgesehen, zumal derartige Extruder meist eine im wesentlichen horizontale Erstreckung der Extruderschnecke aufweisen.

Daher liegt der Erfindung die Aufgabe zugrunde, eine Extrusionsvorrichtung gemäß dem Oberbegriff von Anspruch 1 zu schaffen, die eine Verbesserung der Extrusionsleistung mit einer besseren Eignung auch für zuzuführende Materialstreifen des zu extrudierenden Materials in unterschiedlicher Beschaffenheit kombiniert.

Diese Aufgabe wird erfindungsgemäß durch eine Extrusionsvorrichtung nach Anspruch 1 sowie durch das Verfahren nach Anspruch 17 gelöst. Vorteilhafte Weiterbildungen ergeben sich aus den Unteransprüchen.

Bei einer erfindungsgemäßen Extrusionsvorrichtung läßt sich zunächst durch die erfindungsgemäße Buchse eine im wesentlichen achsparallele Zufuhr des zu extrudierenden Materials gewährleisten. Durch die Relativgeschwindigkeit zwischen der Extruderschnecke und der Buchse wird erreicht, daß in dem erfindungsgemäßen Ringspalt, der sich verjüngt, eine Vergleichmäßigung der Materialbeaufschlagung entsteht. Die Relativgeschwindigkeit ist von Null verschieden, muß jedoch nicht groß sein, sondern kann beispielsweise deutlich geringer als die Extrusionsgeschwindigkeit selbst sein. Hierdurch ist die Scherwirkung des Materials auf das erforderliche Minimum reduziert, obwohl dennoch die gewünschte Vergleichmäßigung und damit eine Ringsumbefüllung sichergestellt ist.

Besonders günstig ist es hierbei, daß trotz einer horizontalen Extruderschnecke eine achsparallele Befüllung erstmals ermöglicht wird. Die Extruderschnecke wird nicht seitlich, sondern nur axial belastet, so daß sie keine Durchbiegung durch die Materialbeaufschlagung erfährt. Damit ist es aber möglich, das Spiel zwischen Extrudergehäuse und Extruderschnecke zu reduzieren, so daß der Wirkungsgrad verbessert ist.

Erfindungsgemäß ist es besonders günstig, wenn sich der Ringspalt zwischen Buchse und Extruderschnecke verjüngt. Das in Streifenform vorliegende Material kann bei einem konischen Ringspalt zunächst von der Extruderschnecke oder der Buchse erfaßt werden und wird dann durch die wendelförmigen Gewindegänge der Extruderschnecke gleichsam automatisch in den konischen Spalt hereingezogen. Es erfolgt jedenfalls eine Verdichtung, die auch die Wahrscheinlichkeit, daß Lufteinschlüsse entstehen, reduziert, wobei auch hier die eingeleiteten Kräfte zum einen Umfangkräfte sind, die radial gleichmäßig nach außen auf die Buchse und zum anderen radial gleichmäßig nach innen auf die Extruderschnecke wirken, und zum anderen die Extruderschnecke und das Extrudergehäuse in axialer Richtung belasten. Axiale Kräfte lassen sich aber regelmäßig durch entsprechende Lager ohne weiteres auffangen.

Erfindungsgemäß besonders günstig ist es ferner, wenn die Buchse mit einem Innengewinde versehen ist. Das Innengewinde ist bevorzugt gegenläufig zur Extruderschnecke ausgebildet. Durch diese Ausgestaltung entsteht sowohl innen als auch außen eine Schraubenlinie, die die Förderung im Einzugsbereich unterstützt. Während bei den bekannten Extrusionsvorrichtungen die partielle Rückströmung, der sogenannte Rückquatsch, ein Problem darstellt, dem beispielsweise bei der aus der DE-PS 4 005 400 bekannten Lösung durch besondere Maßnahmen begegnet werden soll, läßt sich erfindungsgemäß durch die Steuerung der Drehgeschwindigkeit der Gewindebuchse der Stauwulst einstellen. Ein durch die beginnende Plastifizierung erfolgter Stauwulst dient einerseits zur Vergleichmäßigung des Zufuhrüberschusses, stellt jedoch andererseits eine Quelle möglicher Störungen dar, so daß es günstig ist, wenn man ihn in seiner Größe begrenzt hält.

Die erfindungsgemäße Extrusionsvorrichtung kann vorteilhaft mit einer Wickelvorrichtung kombiniert werden, bei welcher das zu extrudierende Material, das in Streifenform vorliegt, in einem Zuführbereich um eine Antriebswelle aufgewickelt wird, wobei der Materialstreifen bereits in mehreren Gängen aufgewickelt ist, bevor er die Gewindebuchse erreicht. In einer modifizierten Ausgestaltung ist es vorgesehen, den recht breiten Materialstreifen mantelförmig auf der Antriebswelle hängen zu lassen, wobei die Breite des Streifens bei dieser Lösung bevorzugt etwa drei Viertel des Umfangs der Antriebswelle beträgt. Die erfindungsgemäße Gewindebuchse vermag dann die Materialzufuhr um den Umfang betrachtet zu vergleichmäßigen, indem durch die Relativdrehung zwischen Gewindebuchse und Extruderschnecke das restliche Viertel,über das der Materialstreifen nicht hängt, mit in Umfangsrichtung gefördertem Material versorgt wird.

Die Ausführungsform mit dem aufgehängten Materialstreifen erlaubt die Verwendung recht dicker und dementsprechend langsam zuzuführender Materialstreifen, die zudem ähnlich breit sind. Damit ist die erfindungsgemäße Extrusionsvorrichtung auch für hohe Leistungsklassen geeignet.

Es versteht sich, daß die Drehzahl der erfindungsgemäßen Gewindebuchse in weiten Bereichen an die Erfordernisse anpaßbar ist. Bevorzugt ist ihre Drehrichtung gegenüber der Drehrichtung der Extruderschnecke entgegengesetzt, und ihre Drehzahl etwa so groß wie oder geringer als die Drehzahl der Extruderschnecke und damit der Antriebswelle. In einer modifizierten Ausgestaltung ist es allerdings vorgesehen, die Gewindebuchse im gleichen Drehsinn wie die Extruderschnecke vorzusehen, jedoch mit einer gegenüber deren Drehzahl verminderten Drehzahl. Auch bei dieser Lösung ergibt sich eine Relativgeschwindigkeit, die von Null verschieden ist, was erfindungsgemäß wesentlich ist. Es erfolgt eine Vergleichmäßigung der Materialbeaufschlagung durch Ringsumverteilung.

Während es erfindungsgemäß bevorzugt ist, die Gewindeschnecke in unmittelbarer räumlicher Nähe zum Extrudergehäuse zu montieren und damit auch einen thermischen Ausgleich zwischen dem in der Regel beheizten Extrudergehäuse und der Gewindebuchse zu ermöglichen, ist es in einer modifizierten Ausgestaltung vorgesehen, die Gewindebuchse räumlich zu entkoppeln und bereits im Übergangsbereich zwischen Antriebswelle und Extruderschnecke vorzusehen. Bei dieser Lösung läßt sich eine axiale Verschiebbarkeit des Gewindegehäuses recht leicht gewährleisten, wobei es aber bevorzugt ist, die Klastifizierung des zuzuführenden Materials bereits durch die mindestens indirekt erwärmte Gewindebuchse zu fördern.

Die Gewindebuchse weist bevorzugt anschließend an ihren Eingangsbereich eine Einführschräge auf, die entweder drehfest mit ihr oder drehfest mit dem Extrudergehäuse verbunden ist. Diese Einführschräge erlaubt es, auch etwaige recht schräg herabhängende Materialstreifen zu erfassen, etwa wenn der Extruder leergefahren werden soll und eine Reinigungssubstanz extrudiert wird.

Die erfindungsgemäße Buchse kann auch mit einer inneren Reiboberfläche versehen sein, die die gewünschte Förderwirkung gegenläufig zur Förderwirkung der Extruderschnecke bewirkt, ohne aber die mit einem Gewinde einhergehende Zerkleinerungsund Umformungswirkung auf das Material auszuüben.

In einer besonders günstigen Ausgestaltung der erfindungsgemäßen Extrusionsvorrichtung ist es vorgesehen, mehrere Materialstreifen zuzuführen. Während bei den bislang bekannten Extrusionsvorrichtungen besondere Maßnahmen getroffen werden mußten, um eine intensive Durchmischung mehrerer Materialstreifen zu gewährleisten, läßt sich mit der erfindungsgemäßen Extrusionsvorrichtung der Durchmischungsgrad des Materials bereits eingangsseitig der Extruderschnecke derart steigern, daß auch sogenannte Transferbereiche entbehrlich sein können. Die Durchmischung bereits im Bereich der erfindungsgemäßen Buchse läßt sich durch die Temperatur der Buchse einerseits, aber andererseits auch die Drehzahl der Buchse als Relativdrehzahl zur Extruderschnecke in weiten Bereichen an die Erfordernisse anpassen.

So ist es beispielsweise möglich, die Buchse mindestens im Bereich ihres Buchsengehäuses von dem Heizmedium durchströmen zu lassen, das auch das Extrudergehäuse durchströmt. Durch die enge Verbindung zwischen dem Buchsengehäuse und der eigentlichen Buchse wird die Buchse auf die erforderliche Temperatur gebracht. Damit wird die Strecke, über welche die Erwärmung des Materials vorgesehen ist, erfindungsgemäß automatisch verlängert, so daß auch eine Vergleichmäßigung der Heizwirkung entsteht. Durch die am Außenumfang des zugeführten Materials erzeugte Bewegung entsteht erfindungsgemäß eine besondere Rührwirkung, die dem Durchmischungsgrad im Eingangsbereich des Extruders zugute kommt. Insgesamt ermöglicht die erfindungsgemäße Buchse eine verbesserte Extrusionsqualität auch bei Beschickung unterschiedlicher Materialien, wobei es sich versteht, daß die erfindungsgemäßen Vorteile nicht auf die Verwendung von Elastomeren beschränkt sind.

Es versteht sich, daß der Winkel, in welchem der Materialstreifen im Zuführbereich zugeführt wird, in weiten Bereichen an die Erfordernisse anpaßbar ist. Beispielsweise kann der Streifenförderer, der entsprechende Förderwalzen für die Materialstreifen aufweist, so ausgelegt sein, daß sich seine Auslaßachse in einem Winkel von beispielsweise 30° zur Welle erstreckt, wobei der Auftreffpunkt der Auslaßachse auf die Welle dann bevorzugt knapp hinter dem Beginn der Welle, also dem zugehörigen Getriebe benachbart, vorgesehen ist. Der Materialstreifen wird dann beim Auftreffen auf die Welle umgelenkt und zwar in eine achsparallele Richtung, so daß er spätestens beim Erreichen des Übergangsbereichs zwischen Antriebswelle und Extruderschnecke parallel zur Achse der Welle verläuft.

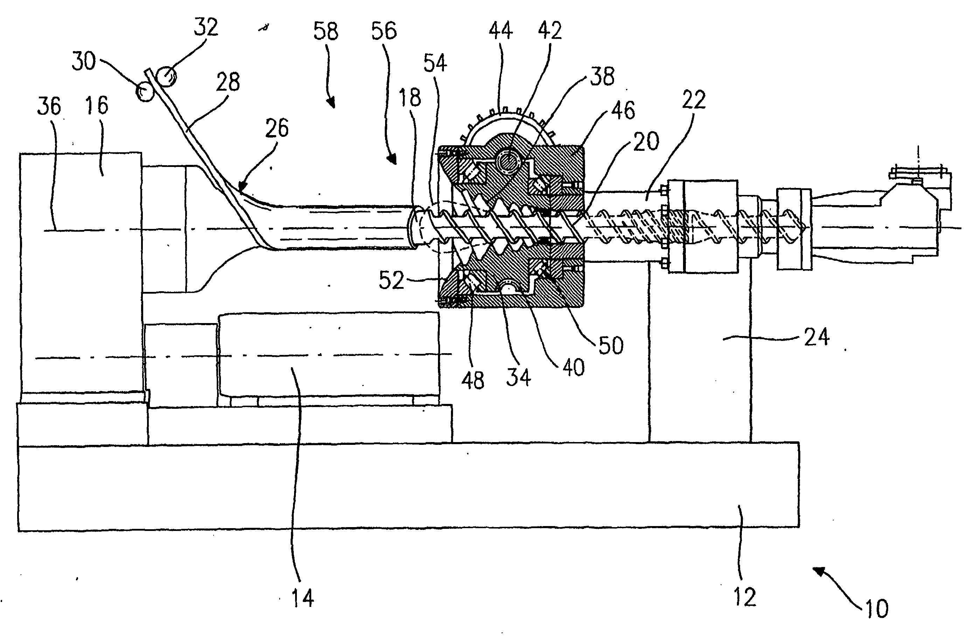

Weitere Vorteile, Einzelheiten und Merkmale ergeben sich aus der nachfolgenden Beschreibung eines Ausführungsbeispiels der Erfindung anhand der Zeichnung. Es zeigt:

Die einzige Figur der Zeichnung eine leicht schematisierte Seitenansicht einer erfindungsgemäßen Extrusionsvorrichtung.

Die einzige Figur der Zeichnung zeigt eine erfindungsgemäße Extrusionsvorrichtung 10 in einer Ausführungsform. Die Extrusionsvorrichtung 10 weist eine Gerätebasis 12 auf, auf welcher ein Antriebsmotor 14 abgestützt ist. Der Antriebsmotor 14 ist an ein Getriebe 16 angeflanscht, aus dem eine Antriebswelle 18 heraustritt. Die Antriebswelle 18 erstreckt sich oberhalb der Gerätebasis 12 im wesentlich horizontal und geht in eine Extruderschnecke 20 über.

Die Extruderschnecke 20 ist in einem Extrudergehäuse 22 geführt, das über eine Stütze 24 auf der Gerätebasis 12 abgestützt ist.

Die Antriebswelle 18 weist in ihrem dem Getriebe 16 benachbarten Bereich eine Ausrundung 26 auf. Die Ausrundung ermöglicht, daß dort ein Streifen 28 aus zu extrudierendem Material in recht flachem Winkel zugeführt wird. Hierzu sind schematisch dargestellte Zuführwalzen 30, 32 vorgesehen. Der Materialstreifen weist eine Breite auf, die etwa drei Viertel des Umfangs der Antriebswelle 18 entspricht. In dem dargestellten Ausführungsbeispiel ist seine seitliche Steifigkeit so groß, daß er durch die Drehung der Antriebswelle 18 nicht um diese gewickelt, sondern einer erfindungsgemäßen Gewindebuchse 34 parallel zur Achse 36 der Welle 18 und damit der Extruderschnecke 20 zugeführt wird.

Die erfindungsgemäße Gewindebuchse 34 ist an ihrer Innenseite mit einem Innengewinde 38 versehen. Das Innengewinde 38 ist bezogen auf die Gewindegänge der Extruderschnecke 20 gegenläufig ausgebildet. Die Gewindebuchse 34 weist an ihrem Außenumfang einen sich in Tangentialrichtung erstreckenden halbkreisförmigen Gewindegang 40. In diesem Gewindegang läuft ein Getrieberad 42 und bildet mit ihm ein Schneckengetriebe, wobei der Antrieb des Getrieberads 42 über ein weiteres Getrieberad 44 schematisch dargestellt ist. Der Antrieb ist von der Drehzahl des Antriebmotors 14 entkoppelt, und die Drehzahl der Gewindebuchse 34 läßt sich über eine spezielle Steuervorrichtung an die Erfordernisse anpassen.

Das Getrieberad 42 und auch die Gewindebuchse 34 sind in einem Buchsengehäuse 46 gelagert. Das Buchsengehäuse 46 ist in dem dargestellten Ausführungsbeispiel fest mit dem Extrudergehäuse 22 verbunden und steht damit auch in thermischer Verbindung mit diesem, so daß es von dem Extrudergehäuse 22 miterwärmt wird und seinerseits die Gewindebuchse 34 erwärmt. Die Lagerung der Gewindebuchse 34 in dem Buchsengehäuse 46 erfolgt über zwei Kegelrollenlager 48, 50, die einander zugewandt schrägstehend ausgebildet ist, so daß die Abstützung sowohl radialer als auch axialer Kräfte gut möglich ist.

Das Buchsengehäuse 46 weist eingangsseitig und unmittelbar an die Gewindebuchse 34 anschließend eine Einführschräge 52 auf. Die Einführschräge 52 ist ziemlich weit nach außen gezogen, so daß sie an ihrem Außenumfang nahezu radial verläuft und auch recht weit von außen zugeführte Materialstreifen umzuleiten und der Gewindebuchse 34 achsparallel zuzuführen vermag.

Beim Betrieb wird die Gewindebuchse 34 bevorzugt gegenläufig zur Extruderschnecke 20 angetrieben. Der zugeführte Materialstreifen 28 wird an seinem Außenumfang damit in Gegenrichtung zum Antrieb an seinem Innenumfang bewegt. Er wird zugleich erwärmt und damit partiell klastifiziert. Durch die Steuerung der Geschwindigkeit der Förderwalzen 30, 32 im Verhältnis zur Extrusionsgeschwindkeit läßt sich der Stauwulst insofern einstellen.

In einem modifizierten Ausführungsbeispiel ist unmittelbar am der Extruderschnecke 20 eine Aufweitung dieser vorgesehen. Diese Aufweitung 54 ist in der Figur gestrichelt angedeutet. Diese Lösung ist besonders geeignet, wenn die Gewindebüchse mit ihrem Buchsengehäuse 46 axial verschieblich gelagert ist. Hierdurch läßt sich dann ein Ringspalt 56 zwischen der Gewindebuchse 34 und der Extruderschnecke 20 leicht einstellen.

Es versteht sich, daß weitere Modifizierungen möglich sind, ohne den Bereich der Erfindung zu verlassen. Beispielsweise kann das Material bei Verwendung eines etwas schmaleren Materialstreifens 28 auch im Zuführbereich 58 um die Antriebswelle 18 gewickelt werden, wobei die Zufuhr hierbei dann entweder manuell oder automatisch erfolgt und bei einmal aufgewickelten Materialstreifen der Materialstreifen 28 gleichsam automatisch abgezogen und dem Extruder zugeführt wird.

## Patentansprüche

1. Extrusionsvorrichtung mit einer Extruderschnecke und einer Welle, die von einem Antriebsmotor angetrieben ist, und mit einer Zufuhreinrichtung für das zu extrudierende Material, **dadurch gekennzeichnet, daß** die Zufuhreinrichtung eine Buchse (34) aufweist, die insbesondere mit einem Innengewinde (38) versehen ist und die in eine Relativgeschwindigkeit gegenüber der sich drehenden Extruderschnecke (20) versetzbar ist, die von deren Drehzahl unabhängig ist.

2. Extrusionsvorrichtung nach Anspruch 1, **dadurch gekennzeichnet, daß** die Gewindebuchse (34) sich aus Sicht des zu extrudierenden Materials betrachtet in einem Drehsinn dreht, der vom Drehsinn der Extruderschnecke (20) verschieden ist.

3. Extrusionsvorrichtung nach einem der vorhergehenden Ansprüche, **dadurch gekennzeichnet, daß** das Innengewinde (38) gegenläufig zur Extruderschnecke (20) ausgebildet ist.

4. Extrusionsvorrichtung nach einem der vorhergehenden Ansprüche, **dadurch gekennzeichnet, daß** der Innendurchmesser des Innengewindes (38) und damit der Gewindebuchse (34) in Strömungsrichtung abnimmt und ausgangsseitig der Gewindebuchse (34) im wesentlichen dem Außendurchmesser der Extruderschnecke (20) entspricht.

5. Extrusionsvorrichtung nach einem der vorhergehenden Ansprüche, **dadurch gekennzeichnet, daß** der Innendurchmeser des Innengewindes (38) in Strömungsrichtung mit abnehmender, insbesondere kontinuierlich abnehmender, Steigung abnimmt.

6. Extrusionsvorrichtung nach einem der vorhergehenden Ansprüche, **dadurch gekennzeichnet, daß** stromauf anschließend an das Innengewinde (38) eine Einführschräge (52) ausgebildet ist, die insbesondere gehäusefest gelagert ist.

7. Extrusionsvorrichtung nach einem der vorhergehenden Ansprüche, **dadurch gekennzeichnet, daß** die Gewindebuchse (34) eine veränderbare Relativgeschwindigkeit zur Extruderschnecke (20) aufweist.

8. Extrusionsvorrichtung nach einem der vorhergehenden Ansprüche, **dadurch gekennzeichnet, daß** die Gewindesteigung des Innengewindes (38) gleich oder im wesentlichen gleich der Gewindesteigung der Extruderschnecke ist.

9. Extrusionsvorrichtung nach einem der vorhergehenden Ansprüche, **dadurch gekennzeichnet, daß** zu extrudierendes Material in Form von Streifen (28) der Extrusionsvorrichtung (10) zuführbar ist, wobei die Streifen (29) mindestens teilweise von der Drehung der der Extruderschnecke (20) vorgeschalteten Welle (18) erfaßbar und der Gewindebuchse (34) zuführbar sind.

10. Extrusionsvorrichtung nach einem der vorhergehenden Ansprüche, **dadurch gekennzeichnet, daß** die Gewindebuchse (34) bezogen auf das Extrudergehäuse (22) verschiebbar gelagert ist.

11. Extrusionsvorrichtung nach einem der vorhergehenden Ansprüche, **dadurch gekennzeichnet, daß** die Gewindebuchse (34) einen Eingangsdurchmesser. von etwa dem dreifachen Durchmesser der Extruderschnecke (20) aufweist und, daß in Strömungsrichtung betrachtet ihr Beginn hinter dem Beginn der Extruderschnecke (20) angeordnet ist.

12. Extrusionsvorrichtung nach einem der vorhergehenden Ansprüche, **dadurch gekennzeichnet, daß** die Antriebswelle (18) und die Extruderschnecke (20) sich in Strömungsrichtung betrachtet in einem Winkel zur Horizontalen von 0 bis 45°, insbesondere von etwa 15° abwärts erstrecken.

13. Extrusionsvorrichtung nach einem der vorhergehenden Ansprüche, **dadurch gekennzeichnet, daß** die Extruderschnecke (20) eine Aufweitung aufweist, die mit der eingangsseitigen Aufweitung der Gewindebuchse (34) zusammenfällt, wobei der Spalt (56) zwischen Extruderschnecke (20) und Gewindebuchse (34) durch im wesentlichen horizontales Verschieben der Gewindebuchse (34) einstellbar ist.

14. Extrusionsvorrichtung nach einem der vorhergehenden Ansprüche, **dadurch gekennzeichnet, daß** die Drehgeschwindigkeit der Buchse (34) geringer als die Drehgeschwindigkeit der Extruderschnecke (20) ist.

15. Extrusionsvorrichtung nach einem der vorhergehenden Ansprüche, **dadurch gekennzeichnet, daß** die Extruderschnecke (20) und die Buchse (34) sich gleichsinnig drehen.

16. Extrusionsvorrichtung'nach einem der Ansprüche 1 bis 14, **dadurch gekennzeichnet, daß** die Extruderschnecke (20) und die Buchse (34) sich gegensinnig drehen.

17. Verfahren zur Herstellung von zu extrudierendem Material in einer Extrusionsvorrichtung, mit einer in einem Extrudergehäuse laufenden Extruderschnecke, die über eine Antriebswelle angetrieben ist, bei welchem Verfahren zu extrudierendes Material der Extruderschnecke eingangsseitig des Extrudergehäuses zugeführt wird, **dadurch gekennzeichnet, daß** die Zufuhr des Materials zur Extruderschnecke im wesentlichen parallel zur Achse der Extruderschnecke erfolgt und eine Buchse vorgesehen ist, deren Drehzahl von der Drehzahl der Extruderschnecke verschieden und insbesondere regelbar ist, wobei das Material in einen sich verjüngenden Spalt zwischen der Buchse und der Extruderschnecke eingezogen wird.

## Claims

1. Extruding device with a barrel extruder and a drive shaft, which is propelled by a drive motor and having a supply mechanism for the material to be extruded, **characterised in that** the supply mechanism has a bush (34), which is provided preferably with an internal thread (38) and which can be shifted into a relative speed compared to the rotating barrel extruder (20), which is independent of the number of revolutions of the latter.

2. Extruding device according to claim 1, **characterised in that** the threaded bush (34), viewed from the material to be extruded turns in a direction of rotation, which is different from the direction of rotation of the barrel extruder (20).

3. Extruding device according to one of the preceding claims, **characterised in that** the internal thread (38) is configured in counter-rotation to the barrel extruder (20).

4. Extruding device according to one of the preceding claims, **characterised in that** the inner diameter of the internal thread (38) and thus of the threaded bush (34) decreases in the direction of flow and at the output to the threaded bush (34) essentially corresponds to the outside diameter of the barrel extruder (20).

5. Extruding device according to one of the preceding claims, **characterised in that** the inner diameter of the internal thread (38) decreases in the direction of flow with decreasing, particularly continuously decreasing, pitch.

6. Extruding device according to one of the preceding claims, **characterised in that** upstream connected to the internal thread (38) a feeding screw (52) is configured, which is preferably lodged on the cabinet.

7. Extruding device according to one of the preceding claims, **characterised in that** the threaded bush (34) has a speed relative to the barrel extruder (20), which is variable.

8. Extruding device according to one of the preceding claims, **characterised in that** the thread pitch of the internal thread (38) is equal or essentially equal to the thread pitch of the barrel extruder.

9. Extruding device according to one of the preceding claims, **characterised in that** material to be extruded is conveyable in the form of strips (28) to the extruding device (10), whereby the strips (29) are at least partly detectable by the rotation of the drive shaft (18) upstream of the barrel extruder (20) and conveyable to the threaded bush (34).

10. Extruding device according to one of the preceding claims, **characterised in that** relative to the extrusion housing (22) the threaded bush (34) is lodged adjustably.

11. Extruding device according to one of the preceding claims, **characterised in that** the threaded bush (34) has an input diameter of approximately three times the diameter of the barrel extruder (20) and that seen in the direction of flow its beginning is arranged behind the beginning of the barrel extruder (20).

12. Extruding device according to one of the preceding claims, **characterised in that** seen in the direction of flow the drive shaft (18) and the barrel extruder (20) extend downwards at an angle to the horizontal from 0 to 45º, preferably approximately 15º.

13. Extruding device according to one of the preceding claims, **characterised in that** the barrel extruder (20) has a widening, which gathers with the widening of the threaded bush (34) on the input side, whereby the gap (56) between barrel extruder (20) and threaded bush (34) is adjustable by essentially horizontal shifting of the threaded bush (34).

14. Extruding device according to one of the preceding claims, **characterised in that** the rotation speed of the socket is less (24) than the rotation speed of the barrel extruder (20).

15. Extruding device according to one of the preceding claims, **characterised in that** the barrel extruder (20) and the socket (34) turn in the same direction.

16. Extruding device after one the claim 1 to 14, **characterised in that** the barrel extruder (20) and the socket (34) turn in opposite directions.

17. Procedure for the production of material in an extruding device, with a barrel extruder, running in an extrusion housing, which is driven by a drive shaft, by which process material to be extruded from the barrel extruder is fed in on the input side of the extrusion housing, **characterised in that** the supply of the material to the barrel extruder occurs essentially parallel to the axis of the barrel extruder and a bush is provided, whose number of revolutions differs from the number of revolutions of the barrel extruder and is preferably adjustable, whereby the material is drawn into a tapering gap between the socket and the barrel extruder.

## Revendications

1. Dispositif d'extrusion équipé d'une vis d'extrusion et d'un arbre qui est commandé par un moteur de commande et ayant une installation d'approvisionnement pour le matériel à extruder, **caractérisé en ce que** l'installation d'approvisionnement présente une douille (34), munie de préférence d'un filet femelle (38), et est ajustable par rapport à la vis d'extrusion (20) en rotation à une vitesse relative qui est indépendante de la vitesse de rotation de celle-ci .

2. Dispositif d'extrusion selon la revendication 1, **caractérisé en ce que** considéré depuis le point de vue du matériel à extruder, la douille filetée (34) tourne dans un sens rotatif qui est différent du sens rotatif de la vis d'extrusion (20).

3. Dispositif d'extrusion selon l'une des revendications précédentes, **caractérisé en ce que** le filet femelle (38) est formé dans le sens opposé à la vis d'extrusion (20).

4. Dispositif d'extrusion selon l'une des revendications précédentes, **caractérisé en ce que** le diamètre intérieur du filet femelle (38) et ainsi celui de la douille filetée (34) diminue sans le sens du flux et sur la face de sortie de la douille filetée (34) correspond essentiellement au diamètre extérieur de la vis d'extrusion (20).

5. Dispositif d'extrusion selon l'une des revendications précédentes, **caractérisé en ce que** le diamètre intérieur du filet femelle (38) diminue sans le sens du flux avec un pas de filetage diminuant, de préférence diminuant de façon continue.

6. Dispositif d'extrusion selon l'une des revendications précédentes, **caractérisé en ce que** raccordée au filet femelle (38) en amont une vis d'introduction (52) est formée qui est logé de préférence sur le boîtier.

7. Dispositif d'extrusion selon l'une des revendications précédentes, **caractérisé en ce que** la douille filetée (34) présente une vitesse relative variable à la vis d'extrusion (20).

8. Dispositif d'extrusion selon l'une des revendications précédentes, **caractérisé en ce que** le pas de filetage du filet femelle (38) est identique ou essentiellement identique au pas de filetage de la vis d'extrusion.

9. Dispositif d'extrusion selon l'une des revendications précédentes, **caractérisé en ce que** du matériel à extruder peut être alimenté sous forme de bande (28) vers le dispositif d'extrusion, où les bandes (29) sont au moins en partie détectables par la rotation de l'arbre couplée en amont du dispositif d'extrusion et sont convoyables vers la douille filetée (34).

10. Dispositif d'extrusion selon l'une des revendications précédentes, **caractérisé en ce que** la douille filetée (34) est logée déplaçable par rapport au boîtier d'extrusion (22).

11. Dispositif d'extrusion selon l'une des revendications précédentes, **caractérisé en ce que** la douille filetée (34) présente un diamètre d'entrée d'environ le triple du diamètre de la vis d'extrusion (20) et que vu dans le sens d'écoulement, son commencement est disposé derrière le commencement de la vis d'extrusion (20).

12. Dispositif d'extrusion selon l'une des revendications précédentes, **caractérisé en ce que** l'arbre de commande (18) et la vis d'extrusion (20) vus dans le sens d'écoulement s'étendent vers le bas à un angle de 0 à 45?, de préférence d'environ 15? par rapport à l'horizontale.

13. Dispositif d'extrusion selon l'une des revendications précédentes, **caractérisé en ce que** la vis d'extrusion (20) présente un élargissement qui converge avec l'élargissement sur le côté d'entrée de la douille filetée (34), où l'écart (56) entre la vis d'extrusion (20) et la douille filetée (34) est réglable par le décalage essentiellement horizontal de la douille filetée (34).

14. Dispositif d'extrusion selon l'une des revendications précédentes **caractérisé en ce que** la vitesse de rotation de la douille (24) est plus faible que la vitesse de rotation de la vis d'extrusion (20).

15. Dispositif d'extrusion selon l'une des revendications précédentes, **caractérisé en ce que** la vis d'extrusion (20) et la douille (34) tournent dans le même sens.

16. Dispositif d'extrusion selon les revendications 1 à 14, **caractérisé en ce que** la vis d'extrusion (20) et la douille (34) tournent dans le sens opposé.

17. Procédure de fabrication de matériel à extruder dans un dispositif d'extrusion, avec une vis d'extrusion qui rentre dans un boîtier d'extrusion, qui est commandé par un arbre de commande, le matériel à extruder étant conduit au cours de cette procédure vers la vis d'extrusion sur le côté d'entrée du boîtier d'extrusion, **caractérisée en ce que** l'approvisionnement du matériel vers la vis d'extrusion s'ensuit essentiellement parallèle à l'axe de la vis d'extrusion et qu'une douille est prévue dont la vitesse de rotation diffère de la vitesse de rotation de la vis d'extrusion et est réglable de préférence, où le matériel est rentré dans un écart s'effilant entre la douille et la vis d'extrusion.
